(19) Europäisches Patentamt
European Patent Office
Office européen des brevets

(11) EP 4 617 302 A1

(12) EUROPEAN PATENT APPLICATION
published in accordance with Art. 153(4) EPC

(43) Date of publication:
**17.09.2025 Bulletin 2025/38**

(21) Application number: **23903675.9**

(22) Date of filing: **04.09.2023**

(51) International Patent Classification (IPC):
***C08J 3/24*** *(2006.01)* ***C08J 3/12*** *(2006.01)*

(52) Cooperative Patent Classification (CPC):
**C08J 3/12; C08J 3/24**

(86) International application number:
**PCT/KR2023/013127**

(87) International publication number:
**WO 2024/128471 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.12.2022 KR 20220175627**

(71) Applicant: **LG CHEM, LTD.**
**Seoul 07336 (KR)**

(72) Inventors:
- **WOO, Heechang**
  **Daejeon 34122 (KR)**
- **JU, Jin Hyuck**
  **Daejeon 34122 (KR)**
- **LEE, Junwye**
  **Daejeon 34122 (KR)**
- **HAN, Sangwon**
  **Daejeon 34122 (KR)**

(74) Representative: **Plasseraud IP**
**104 Rue de Richelieu**
**CS92104**
**75080 Paris Cedex 02 (FR)**

# (54) PREPARATION METHOD OF SUPER ABSORBENT POLYMER

(57) The present disclosure relates to a preparation method of a super absorbent polymer. More specifically, it relates to a preparation method of a super absorbent polymer, and a super absorbent polymer exhibiting excellent physical properties by performing pulverization and hydration processes under specific conditions to significantly reduce the amount of fine powder generated.



Processed by Luminess, 75001 PARIS (FR)

## Description

[TECHNICAL FIELD]

Cross-reference to Related Application(s)

This application claims the benefits of Korean Patent Application No. 10-2022-0175627 filed on December 15, 2022 with the Korean Intellectual Property Office, the disclosure of which is incorporated herein by reference in its entirety.

The present disclosure relates to a preparation method of a super absorbent polymer. More specifically, it relates to a preparation method of a super absorbent polymer, and a super absorbent polymer exhibiting excellent physical properties by performing pulverization and hydration processes under specific conditions to significantly reduce the amount of fine powder generated.

[BACKGROUND OF ART]

A super absorbent polymer (SAP) is a type of synthetic polymeric material capable of absorbing 500 to 1000 times its own weight of moisture. Various manufacturers have denominated it with different names, such as SAM (Super Absorbency Material), AGM (Absorbent Gel Material), and the like. Such super absorbent polymers started to be practically applied in sanitary products, and they are now being widely used for water retaining soil products for gardening, water stop materials for the civil engineering and construction, sheets for raising seedling, fresh-keeping agents for food distribution fields, materials for poultices, or the like.

These super absorbent polymers have been widely used in the field of hygienic materials such as diapers or sanitary napkins. In such hygienic materials, the super absorbent polymer is generally contained in a state of being spread in the pulp. In recent years, however, continuous efforts have been made to provide hygienic materials such as diapers having a thinner thickness. As a part of such efforts, the development of so-called pulpless diapers and the like in which the pulp content is reduced or pulp is not used at all is being actively advanced.

In the case of the above-described hygienic materials in which the pulp content is reduced or pulp is not used, the super absorbent polymer is included in a relatively high ratio, so that the super absorbent polymer particles are inevitably included in multiple layers in the hygienic materials. In order for the entire super absorbent polymer particles included in multiple layers to more efficiently absorb a large amount of liquid such as urine, the super absorbent polymer basically needs to exhibit excellent absorption performance as well as a high absorption rate.

Meanwhile, such a super absorbent polymer is generally prepared by performing the step of polymerizing monomers to prepare a hydrogel polymer containing a large amount of moisture; and the step of drying the hydrogel polymer, and then pulverizing it into polymer particles having a desired particle diameter. However, when the hydrogel polymer is dried and then pulverized as described above, a large amount of fine powder is generated, which has a problem of lowering the physical properties of the super absorbent polymer to be finally prepared.

In addition, in order to reuse the fine powder, it is common to mix the fine powder with water for agglomeration to produce a fine reassembly, and then add the fine reassembly to the process such as drying/pulverization/classification. However, the water used herein may cause problems such as increased energy usage during drying and increased load on the device, which may reduce productivity of super absorbent polymer production.

Accordingly, there is a continuous demand for developing a technique for preparing a super absorbent polymer without generating a fine powder in order to fundamentally solve these problems.

[DETAILED DESCRIPTION OF THE INVENTION]

[Technical Problem]

Accordingly, there are provided a preparation method of a super absorbent polymer, and a super absorbent polymer exhibiting excellent physical properties by performing pulverization and hydration processes under specific conditions to significantly reduce the amount of fine powder generated.

[Technical Solution]

In order to solve the problems, there is provided a preparation method of a super absorbent polymer including the steps of:

forming a hydrogel polymer containing a cross-linked polymer obtained by cross-linking polymerization of a water-soluble ethylene-based unsaturated monomer having an acidic group in the presence of an internal cross-linking

agent (step 1);
drying the hydrogel polymer to prepare a base resin (step 2);
primary pulverizing the dried base resin and classifying it into particles equal to or larger than a standard diameter and particles smaller than a standard diameter (step 3);
obtaining a hydrated super absorbent polymer using a surface hydrating solution containing water on the classified base resin equal to or larger than the standard diameter (step 4); and
secondary pulverizing the hydrated super absorbent polymer to obtain a super absorbent polymer (step 5),
wherein the standard diameter is determined within the range of 300 μm or more to 850 μm or less.

## [ADVANTAGEOUS EFFECTS]

According to the preparation method of a super absorbent polymer of the present disclosure, it is possible to prepare a super absorbent polymer exhibiting excellent physical properties by performing pulverization and hydration processes under specific conditions to significantly reduce the amount of fine powder generated.

## [DETAILED DESCRIPTION OF THE EMBODIMENTS]

The terminology used herein is for the purpose of describing particular embodiments only and is not intended to limit the invention. The singular forms are intended to include the plural forms as well, unless the context clearly indicates otherwise. It will be further understood that the terms "include", "have", or "possess" when used in this specification, specify the presence of stated features, steps, components, or combinations thereof, but do not preclude the presence or addition of one or more other features, steps, components, or combinations thereof.

As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

Hereinafter, the preparation method for a super absorbent polymer and the super absorbent polymer of the present disclosure will be described in more detail.

The terminology used herein is only intended to refer to specific embodiments and is not intended to limit the present invention. Further, as used herein, the singular forms also include the plural forms unless the phrases clearly indicate the opposite.

The terminology "polymer" in the present disclosure is in a state in which water-soluble ethylene-based unsaturated monomers are polymerized, and may include all moisture content ranges, or all particle diameter ranges.

In addition, the terminology "super absorbent polymer" is used to encompass all of a cross-linked polymer or a base resin in the form of powder consisting of super absorbent polymer particles in which the cross-linked polymer is pulverized, and the cross-linked polymer or the base resin further processed, for example, drying, pulverization, classification, surface cross-linking, etc., to be in a state suitable for commercialization, depending on the context.

In addition, the terminology "fine powder" refers to particles having a particle diameter of less than 150 μm among the super absorbent polymer particles. The particle diameter of these polymer particles may be measured according to EDANA (European Disposables and Nonwovens Association) WSP 220.3.

In addition, the terminology "chopping" refers to cutting the hydrogel polymer into small pieces of millimeters in order to increase drying efficiency, and is used separately from pulverization to a level of micrometers or normal particles.

In addition, the terminology "micronizing (micronization)" refers to pulverizing the hydrogel polymer to a particle diameter of several tens to hundreds of micrometers, and is used separately from "chopping".

According to an embodiment of the present disclosure, there is provided a preparation method of a super absorbent polymer including the steps of:

forming a hydrogel polymer containing a cross-linked polymer obtained by cross-linking polymerization of a water-soluble ethylene-based unsaturated monomer having an acidic group in the presence of an internal cross-linking agent (step 1);
drying the hydrogel polymer to prepare a base resin (step 2);
primary pulverizing the dried base resin and classifying it into particles equal to or larger than a standard diameter and particles smaller than a standard diameter (step 3);
obtaining a hydrated super absorbent polymer using a surface hydrating solution containing water on the classified

base resin equal to or larger than the standard diameter (step 4); and
secondary pulverizing the hydrated super absorbent polymer to obtain a super absorbent polymer (step 5),
wherein the standard diameter is determined within the range of 300 μm or more to 850 μm or less.

In general, such a super absorbent polymer is prepared by performing the step of polymerizing monomers to prepare a hydrogel polymer containing a large amount of moisture; and the step of drying the hydrogel polymer, followed by pulverizing the hydrogel polymer into polymer particles having a desired particle diameter. However, when the hydrogel polymer is dried and then pulverized as described above, a large amount of fine powder is generated, which causes a problem of lowering physical properties of the super absorbent polymer to be prepared.
Therefore, in order to reuse the fine powder, the fine powder is added into the hydrogel pulverization step, or the fine powder is mixed with water for agglomeration to produce a fine reassembly, and then added to processes such as drying/pulverization/classification. However, the water used herein may increase energy usage during the drying process and increase the load on the device, thereby reducing productivity of the super absorbent polymer production.
Accordingly, the present inventors have confirmed that the amount of fine powder generated can be significantly reduced by performing pulverization and hydration processes under specific conditions, thereby completing the present invention.
Specifically, it was confirmed that the generation of fine powder could be significantly reduced by primary pulverizing the dried hydrogel polymer to have a relatively large diameter to reduce the generation of fine powder, and performing surface hydration on large particles equal to or larger than a standard diameter among the pulverized particles, followed by secondary pulverization.
Hereinafter, the preparation method of a super absorbent polymer will be described in more detail step by step according to specific embodiments of the invention.

**(Polymerization)**

First, the preparation method of a super absorbent polymer according to an embodiment of the present disclosure includes a step of forming a hydrogel polymer by cross-linking polymerization of a water-soluble ethylene-based unsaturated monomer having at least partially neutralized acidic groups in the presence of an internal cross-linking agent (step 1).
Specifically, this is a step of forming a hydrogel polymer by performing thermal polymerization or photopolymerization on a monomer composition including a monomer mixture and a polymerization initiator in the presence of an internal cross-linking agent. The monomer composition may include components commonly used in the preparation of a super absorbent polymer in addition to the components described above.
The water-soluble ethylene-based unsaturated monomer may be any monomer commonly used in the preparation of a super absorbent polymer. Specifically, the water-soluble ethylene-based unsaturated monomer may be a compound represented by the following Chemical Formula 1:

[Chemical Formula1] $R_1\text{-COOM}^1$

in Chemical Formula 1,

$R_1$ is a C2 to C5 alkyl group having an unsaturated bond, and
$M^1$ is a hydrogen atom, a monovalent or divalent metal, an ammonium group, or an organic amine salt.

Preferably, the monomer may be at least one selected from the group consisting of acrylic acid, methacrylic acid, and a monovalent metal salt, a divalent metal salt, an ammonium salt and an organic amine salt of the acid. When acrylic acid and/or a salt thereof is used as a water-soluble ethylene-based unsaturated monomer, it is advantageous to obtain a super absorbent polymer having improved absorption performance. In addition, at least one selected from the group consisting of an anionic monomer of maleic anhydride, fumalic acid, crotonic acid, itaconic acid, 2-acryloylethane sulfonic acid, 2-methacryloylethane sulfonic acid, 2-(meth)acryloylpropanesulfonic acid, or 2-(meth)acrylamide-2-methyl propanesulfonic acid and a salt thereof; a nonionic hydrophilic monomer of (meth)acrylamide, N-substituted (meth)acrylate, 2-hydroxyethyl(meth)acrylate, 2-hydroxypropyl(meth)acrylate, methoxypolyethyleneglycol(meth)acrylate, or polyethyleneglycol(meth)acrylate; and an amino-containing unsaturated monomer of (N,N)-dimethylaminoethyl(meth)acrylate or (N,N)-dimethylaminopropyl(meth)acrylamide, and a quaternary compound thereof may be used.
The term "internal cross-linking agent" as used herein is a term used to distinguish it from a "surface cross-linking agent" commonly used for cross-linking the surface of the base resin, and serves to cross-link and polymerize the unsaturated bonds of the water-soluble ethylene-based unsaturated monomer described above. The cross-linking in the above step proceeds both on the surface and on the inside, but when the surface cross-linking process of the base resin

proceeds, the surface of the particles of the finally prepared super absorbent polymer has a structure cross-linked by a surface cross-linking agent, and the inside of the particles has a structure cross-linked by the internal cross-linking agent.

As a non-limiting example, the internal cross-linking agent may be a multifunctional cross-linking agent such as N,N'-methylenebisacrylamide, trimethylolpropane tri(meth)acrylate, ethyleneglycol di(meth)acrylate, polyethyleneglycol (meth)acrylate, propyleneglycol di(meth)acrylate, polypropyleneglycol (meth)acrylate, butanediol di(meth)acrylate, butyleneglycol di(meth)acrylate, diethyleneglycol di(meth)acrylate, hexanediol di(meth)acrylate, triethyleneglycol di(meth) acrylate, tripropyleneglycol di(meth)acrylate, tetraethyleneglycol di(meth)acrylate, dipentaerythritol pentaacrylate, glycerin tri(meth)acrylate, pentaerythritol tetraacrylate, triarylamine, ethylene glycol diglycidyl ether, propylene glycol, glycerin, or ethylene carbonate, and these may be used alone or in combination of two or more. Preferably, ethylene glycol diglycidyl ether may be used.

The internal cross-linking agent may be used in an amount of 0.01 to 5 parts by weight based on 100 parts by weight of the water-soluble ethylene-based unsaturated monomer. For example, the internal cross-linking agent may be used in an amount of 0.01 parts by weight or more, 0.05 parts by weight or more, 0.1 parts by weight or more, or 0.45 parts by weight or more, and 5 parts by weight or less, 3 parts by weight or less, 2 parts by weight or less, 1 part by weight or less, or 0.7 parts by weight or less. When the content of the internal cross-linking agent is too low, cross-linking does not occur sufficiently, making it difficult to realize a strength above an appropriate level. When the content of the internal cross-linking agent is too high, the internal cross-linking density increases, making it difficult to realize a desired water retention capacity.

In the cross-linking polymerization step, a polymerization initiator commonly used in the preparation of a super absorbent polymer may be included. For example, the polymerization initiator may be an initiator for thermal polymerization or an initiator for photopolymerization according to the polymerization method. In particular, an initiator for thermal polymerization may be used. However, even when the photopolymerization method is applied thereto, a certain amount heat is generated by UV radiation and the like, and some heat occurs as the polymerization reaction, an exothermal reaction, progresses. Therefore, the thermal polymerization initiator may be additionally included.

Furthermore, as the thermal polymerization initiator, one or more initiators selected from the group consisting of a persulfate-based initiator, an azo-based initiator, hydrogen peroxide, and ascorbic acid may be used. Specifically, sodium persulfate ($Na_2S_2O_8$), potassium persulfate ($K_2S_2O_8$), ammonium persulfate ($(NH_4)_2S_2O_8$), and the like may be used as examples of the persulfate-based initiator; and 2,2-azobis(2-amidinopropane) dihydrochloride, 2,2-azobis-(N,N-dimethylene)isobutyramidine dihydrochloride, 2-(carbamoylazo)isobutylonitril, 2,2-azobis[2-(2-imidazolin-2-yl)propane] dihydrochloride, 4,4-azobis-(4-cyanovaleric acid), and the like may be used as examples of the azo-based initiator. More various thermal polymerization initiators are well disclosed in "Principle of Polymerization (Wiley, 1981)" written by Odian, p 203.

For example, the photopolymerization initiator may be one or more compounds selected from the group consisting of benzoin ether, dialkyl acetophenone, hydroxyl alkylketone, phenyl glyoxylate, benzyl dimethyl ketal, acyl phosphine, and $\alpha$-aminoketone. Meanwhile, specific examples of the acyl phosphine include diphenyl(2,4,6-trimethylbenzoyl)phosphine oxide, phenylbis(2,4,6-trimethylbenzoyl)phosphine oxide, ethyl(2,4,6-trimethylbenzoyl)phenylphosphinate, and the like. More various photopolymerization initiators are well disclosed in "UV Coatings: Basics, Recent Developments and New Application (Elsevier, 2007)" written by Reinhold Schwalm, p 115, and the present disclosure is not limited thereto.

The polymerization initiator may be used at a concentration of about 0.001 to 1 wt% based on the monomer composition containing the water-soluble ethylene-based unsaturated monomer. That is, when the concentration of the polymerization initiator is too low, the polymerization rate may become slow and thus a large amount of residual monomer may be extracted from the final product, which is not preferable. On the contrary, when the concentration of the polymerization initiator is too high, a polymer chain forming a network may become short, and thus, the physical properties of polymer may be degraded, such as increase in the content of water-soluble components and decrease in absorbency under pressure, which is not preferable.

Further, the monomer composition may further include additives such as a foaming agent, a surfactant, a thickener, a plasticizer, a storage stabilizer, and an antioxidant, if necessary.

In addition, such a monomer composition may be prepared in the form of a solution in which raw materials such as the above-described monomer, polymerization initiator, and internal cross-linking agent are dissolved in a solvent.

The concentration of the water-soluble ethylene-based unsaturated monomer in the monomer composition containing the internal cross-linking agent and the water-soluble ethylene-based unsaturated monomer having an acidic group may be appropriately adjusted in consideration of polymerization time and reaction conditions, and may be about 20 to about 60 wt%, or about 20 to about 40 wt%.

At this time, any solvent which can dissolve the raw materials may be used without limitation, and for example, water, ethanol, ethyleneglycol, diethyleneglycol, triethyleneglycol, 1,4-butanediol, propyleneglycol, ethyleneglycol monobutylether, propyleneglycol monomethylether, propyleneglycol monomethylether acetate, methylethylketone, acetone, methylamylketone, cyclohexanone, cyclopentanone, diethyleneglycol monomethylether, diethyleneglycol ethylether, toluene, xylene, butyrolactone, carbitol, methylcellosolve acetate, N,N-dimethylacetamide, or a mixture thereof can

be used.

The formation of the hydrogel polymer by polymerizing the monomer composition may be performed by a conventional polymerization method, and the process is not particularly limited. As a non-limiting example, the polymerization method is largely divided into the thermal polymerization and the photopolymerization according to an energy source of the polymerization. In the case of thermal polymerization, it is generally carried out in a reactor equipped with an agitation spindle, such as a kneader. In the case of photopolymerization, it may be carried out in a reactor equipped with a movable conveyor belt.

For example, the hydrogel polymer may be obtained by introducing the monomer composition into a reactor equipped with an agitation spindle such as a kneader, followed by supplying hot air, or heating the reactor to perform thermal polymerization. The hydrogel polymer may be discharged to a reactor outlet in the form of particles with several centimeters to several millimeters depending on a shape of the agitation spindle provided in the reactor. Specifically, a shape of the hydrogel polymer obtained may vary depending on the concentration and injection rate of the monomer mixture to be injected, and a hydrogel polymer having a (weight average) particle diameter of 2 to 50 mm may be usually obtained.

As another example, when photopolymerization is performed on the monomer composition in the reactor equipped with a movable conveyor belt, a hydrogel polymer in the form of a sheet may be obtained. At this time, a thickness of the sheet may vary depending on the concentration and injection rate of the monomer composition to be injected. It is preferable to adjust the thickness to 0.5 to 10 cm in order to ensure the production rate while allowing the entire sheet to be polymerized evenly.

According to one embodiment of the present disclosure, the cross-linking polymerization may be performed at a temperature of 10 °C to 140 °C, preferably, at a temperature of 70 °C to 130 °C or 70 °C to 120 °C. When carried out within the above temperature range, it is suitable for realizing an appropriate cross-linking density achieved by the chelating agent of the present disclosure.

The hydrogel polymer formed in this way may exhibit a moisture content of 30 to 80 wt%. At this time, the "moisture content" is the weight occupied by moisture in the total weight of the hydrogel polymer, and it means a value of which the weight of the dried polymer is subtracted from the weight of the hydrogel polymer. Specifically, the moisture content is defined as a value calculated by measuring the weight loss due to moisture evaporation from the polymer in the process of increasing the temperature of the polymer for drying through infrared heating. At this time, the drying conditions are maintained at room temperature at about 180 °C for about 40 minutes to measure the moisture content.

According to an embodiment of the present disclosure, a step of neutralizing at least some of the acidic groups of the water-soluble ethylene-based unsaturated monomer having an acidic group may be included before the polymerization step.

Specifically, the step of forming a hydrogel polymer (step 1) may be performed by including the step of neutralizing at least some of the acidic groups of the water-soluble ethylene-based unsaturated monomer having an acidic group (step 1-1'); and the step of forming a hydrogel polymer by cross-linking polymerization of a water-soluble ethylene-based unsaturated monomer having at least partially neutralized acidic groups in the presence of an internal cross-linking agent (step 1-2').

The neutralization step of the acidic group is performed by mixing with a neutralizing agent capable of neutralizing the acidic group. Examples of the neutralizing agent include basic materials such as sodium hydroxide, potassium hydroxide, and ammonium hydroxide, but are not limited thereto.

Herein, the degree of neutralization of the acidic group may be 40 to 95 mol%, 40 to 90 mol%, or 45 to 80 mol%. A range of the degree of neutralization may vary depending on the final physical properties. When the degree of neutralization is excessively high, the surface cross-linking reaction may not occur sufficiently, which may result in a decrease in absorbency under pressure (AUP). On the contrary, an excessively low degree of neutralization not only deteriorates absorbency of the polymer, but also gives the polymer hard-to-handle properties, such as those of an elastic rubber.

According to an embodiment of the present disclosure, a polymer is formed using a water-soluble ethylene-based unsaturated monomer having an unneutralized acidic group, and then the polymer is neutralized. In this case, the polymerized polymer has acidic groups, and therefore, a neutralization step may be included after the polymerization step. The neutralizing agent used in the neutralization step and the degree of neutralization of the acidic group after the neutralization may be the same as described above.

Specifically, the step of forming a hydrogel polymer (step 1) may include the step of forming a polymer by cross-linking polymerization of a water-soluble ethylene-based unsaturated monomer having an acidic group in the presence of an internal cross-linking agent (step 1-1); the step of micronizing the neutralized product (step 1-2); and the step of neutralizing at least some of the acidic groups of the polymer to form a hydrogel polymer (steps 1-3). Meanwhile, in the neutralization step (1-3), a polymer agglomeration process is also performed.

Water-soluble ethylene-based unsaturated monomers in a state where acidic groups are not neutralized are in a liquid state at room temperature, and have high miscibility with a solvent (water), and thus exist in the monomer

composition in the form of a mixed solution. However, the water-soluble ethylene-based unsaturated monomers in which the acidic groups are neutralized are in a solid state at room temperature, have different solubility depending on the temperature of the solvent (water), and have lower solubility at a lower temperature.

The water-soluble ethylene-based unsaturated monomers in which acidic groups are not neutralized have higher solubility or miscibility with a solvent (water) than monomers in which acidic groups are neutralized, so that they do not precipitate even at low temperatures, and thus are advantageous for long-term polymerization at low temperatures. Accordingly, it is possible to stably form a polymer having a higher molecular weight and a uniform molecular weight distribution by performing polymerization for a long time using the water-soluble ethylene-based unsaturated monomer in which acidic groups are not neutralized.

In addition, it is possible to form a long chain polymer, thereby achieving an effect of reducing the content of extractable components present in a non-crosslinked state due to incomplete polymerization or cross-linking.

Meanwhile, when polymerization is first performed in a state where the acidic groups of the monomer are not neutralized to form a polymer, and then micronization is performed in the presence of a surfactant after neutralization; neutralization is performed after micronization; or the acidic groups are neutralized at the same time as micronization, a large amount of surfactant may be present on the surface of the polymer to sufficiently play a role of lowering the adhesiveness of the polymer.

According to one embodiment of the present disclosure, when the step of forming a hydrogel polymer (step 1) is performed as a step of neutralization (step 1-3) after polymerization (step 1-1), the neutralization step and the micronization step of the polymer (step 1-2) may be performed sequentially, simultaneously, or alternately. More preferably, the polymerization step (step 1-1), the micronization step of the polymer (step 1-2), and the neutralization step (1-3) may be performed sequentially. Herein, agglomeration of the polymer may be performed simultaneously in the neutralization step.

In other words, a mixture of a polymer and a surfactant (optionally used) is micronized and then neutralized by adding a neutralizing agent; a neutralizing agent is sprayed on the polymer to first neutralize the acidic groups of the polymer, and then a surfactant (optionally used) is added to the neutralized polymer to micronize the mixture in which the surfactant is mixed; or neutralization and micronization of the polymer are performed by simultaneously adding a neutralizing agent and a surfactant (optionally used) to the polymer.

When the polymer is micronized in the presence of a surfactant as described above, hydrophobicity is imparted to the surface of the super absorbent polymer particles in which a hydrophobic functional group included in the surfactant is pulverized, thereby reducing the frictional force between the particles, and micronizing the super absorbent polymer to reduce the degradation in physical properties due to the inter-particle friction.

Meanwhile, in order to evenly neutralize the entire polymer, it may be desirable to leave a certain time gap between the addition of the neutralizing agent and the micronization process.

The surfactant used in the micronization process may be a compound represented by the following Chemical Formula 2 or a salt thereof, but the present disclosure is not limited thereto:

[Chemical Formula 2]

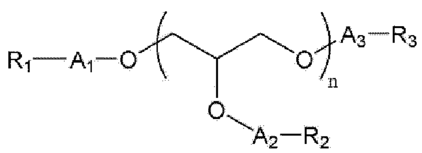

in Chemical Formula 2,

$A_1$, $A_2$ and $A_3$ are each independently a single bond, carbonyl,

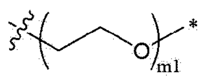,

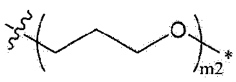 or 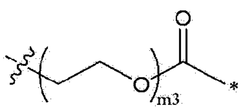,

provided that at least one of these is carbonyl, or

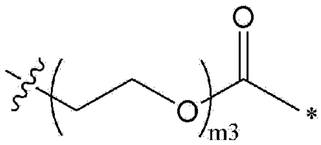,

wherein m1, m2 and m3 are each independently an integer of 1 to 8, each

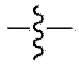

is connected to an adjacent oxygen atom, and



is connected to adjacent $R_1$, $R_2$ and $R_3$, respectively,
$R_1$, $R_2$ and $R_3$ are each independently hydrogen, C6 to C18 linear or branched alkyl or C6 to C18 linear or branched alkenyl, and
n is an integer of 1 to 9.

The surfactant is mixed with the polymer and added so that the ultra-fine pulverization step can be easily performed without agglomeration.

The surfactant represented by the Chemical Formula 2 is a nonionic surfactant and has excellent surface adsorption performance by hydrogen bonding even with an unneutralized polymer, and thus is suitable for realizing a desired agglomeration control effect. On the other hand, in the case of an anionic surfactant other than the nonionic surfactant, when mixed with a polymer neutralized with a neutralizing agent such as NaOH or $Na_2SO_4$, it is adsorbed via the Na+ ion ionized at the carboxyl substituent of the polymer. When mixed with an unneutralized polymer, there is a problem in that adsorption efficiency for the polymer is relatively lowered due to competition with the anion of the carboxyl substituent of the polymer.

Specifically, in the surfactant represented by the Chemical Formula 2, the hydrophobic functional group is the terminal functional group of $R_1$, $R_2$, and $R_3$ (if not hydrogen), and the hydrophilic functional group includes the glycerol-derived part in the chain and the terminal hydroxyl group (when $A_n$ is a single bond and $R_n$ is hydrogen, n=1-3). Herein, the glycerol-derived part and the terminal hydroxyl group are hydrophilic functional groups and serve to improve adsorption performance to the polymer surface. Accordingly, agglomeration of the super absorbent polymer particles can be effectively suppressed.

In Chemical Formula 2, the hydrophobic functional groups of $R_1$, $R_2$, and $R_3$ (if not hydrogen) are each independently C6 to C18 linear or branched alkyl or C6 to C18 linear or branched alkenyl. At this time, when $R_1$, $R_2$, and $R_3$ (if not hydrogen) are alkyl or alkenyl having less than 6 carbon atoms, there is a problem in that the chain length is too short to effectively control the agglomeration of the pulverized particles. When $R_1$, $R_2$, and $R_3$ (if not hydrogen) are alkyl or alkenyl having more than 18 carbon atoms, there may be problems in that the surfactant has reduced mobility and may not be effectively mixed with the polymer, and the unit price of the composition increases due to the increase in cost of the surfactant.

Preferably, $R_1$, $R_2$, and $R_3$ are hydrogen, C6 to C18 linear or branched alkyl such as 2-methylhexyl, n-heptyl, 2-methylheptyl, n-octyl, n-nonyl, n-decanyl, n-undecanyl, n-dodecanyl, n-tridecanyl, n-tetradecanyl, n-pentadecanyl, n-hexadecanyl, n-heptadecanyl, or n-octadecanyl, or C6 to C18 linear or branched alkenyl such as 2-hexenyl, 2-heptenyl, 2-octenyl, 2-nonenyl, n-decenyl, 2-undecenyl, 2-dodekenyl, 2-tridekenyl, 2-tetradekenyl, 2-pentadekenyl, 2-hexadekenyl, 2-heptadekenyl, or 2-octadekenyl.

The surfactant may be selected from compounds represented by the following Chemical Formulae 2-1 to 2-14:

[Chemical Formula 2-1]

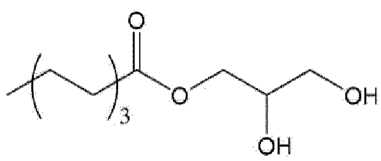

[Chemical Formula 2-2]

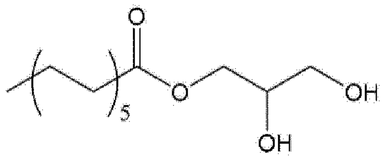

[Chemical Formula 2-3]

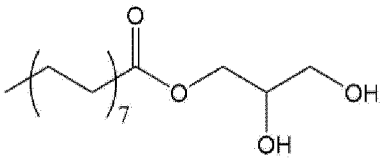

[Chemical Formula 2-4]

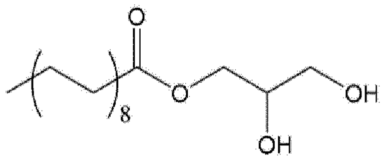

[Chemical Formula 2-5]

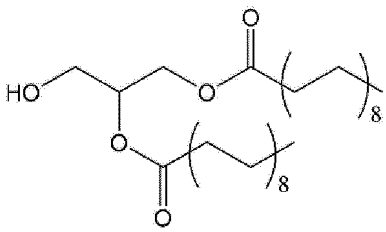

[Chemical Formula 2-6]

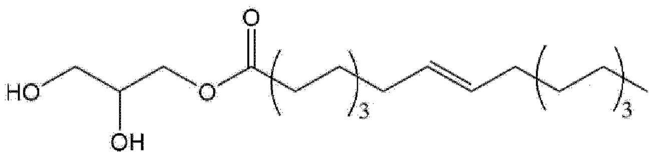

[Chemical Formula 2-7]

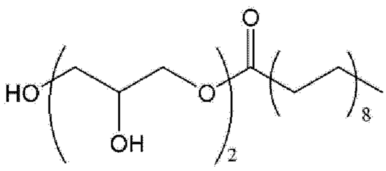

[Chemical Formula 2-8]

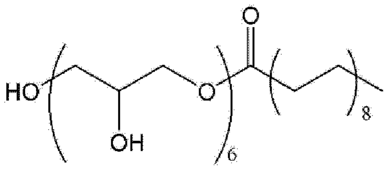

[Chemical Formula 2-9]

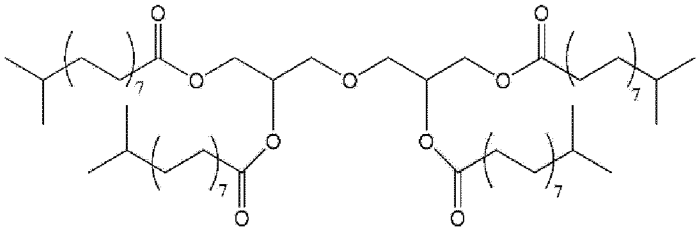

[Chemical Formula 2-10]

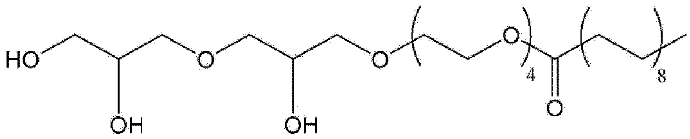

[Chemical Formula 2-11]

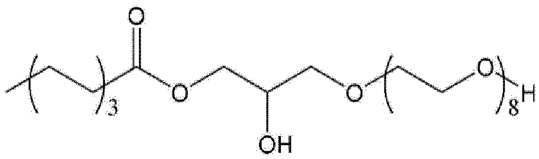

[Chemical Formula 2-12]

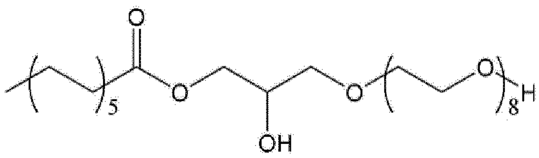

[Chemical Formula 2-13]

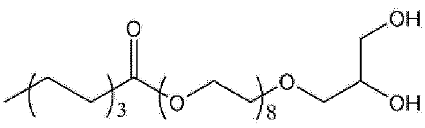

[Chemical Formula 2-14]

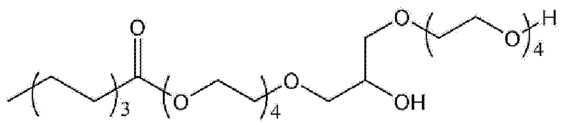

.

Meanwhile, the surfactant may be used in an amount of 0.1 parts by weight or less based on 100 parts by weight of the polymer, depending on productivity or device load. When too much surfactant is used, the surface tension may be lowered, and thus overall physical properties of the final super absorbent polymer may decrease. For example, it may be used in an amount of 0.1 parts by weight or less, preferably 0.05 parts by weight or less, 0.005 parts by weight or less, or 0.001 parts by weight or less based on 100 parts by weight of the polymer.

The method of mixing the surfactant with the polymer is not particularly limited, and may be appropriately selected as long as it is a method capable of evenly mixing the additive with the hydrogel polymer. Specifically, the surfactant may be dry-mixed, dissolved in a solvent and then mixed in a solution state, or melted and then mixed.

For example, the surfactant may be mixed in the form of a solution dissolved in a solvent. At this time, all kinds of solvents including inorganic solvents and organic solvents may be used without limitation, but water is most appropriate considering the ease of the drying process and the cost of the solvent recovery system. Further, a method of adding the surfactant in the form of a solution and the polymer in a reaction tank for mixing, a method of spraying the solution after adding the polymer in a mixer, a method of continuously supplying the polymer and the solution to a continuously operating mixer for mixing, or the like may be used.

**(Drying)**

Subsequently, the preparation method of a super absorbent polymer according to an embodiment of the present disclosure includes the step of drying the hydrogel polymer formed after the polymerization step to obtain a base resin (step 2).

According to an embodiment of the present disclosure, when the step of forming a hydrogel polymer described above (step 1) includes the step of neutralizing at least some of the acidic groups of the water-soluble ethylene-based unsaturated monomer having an acidic group (step 1-1'); and the step of performing cross-linking polymerization of the water-soluble ethylene-based unsaturated monomer having at least partially neutralized acidic groups in the presence of an internal cross-linking agent to form a hydrogel polymer (step 1-2'), referred to as a pre-neutralization polymerization process, the step 2 may be performed as a process of drying the hydrogel polymer that has undergone the above steps.

If necessary, the hydrogel polymer may be further pulverized before drying in order to increase the efficiency of the drying step.

At this time, there is no limitation in the configuration of the pulverizing machine used. Specifically, at least one pulverizing machine selected from the group consisting of a vertical pulverizer, a turbo cutter, a turbo grinder, a rotary cutter mill, a cutter mill, a disc mill, a shred crusher, a crusher, a chopper and a disc cutter may be used, but the present disclosure is not limited thereto.

Herein, the hydrogel polymer may be pulverized so that the particle diameter is about 2 to about 10 mm. The pulverization to a particle diameter of less than 2 mm is not technically easy due to the high moisture content of the hydrogel polymer, and a phenomenon of agglomeration between the pulverized particles may occur. On the other hand, when pulverized to a particle diameter of more than 10 mm, an increase in efficiency of the subsequent drying step may be insignificant.

Meanwhile, when the step of forming a hydrogel polymer described above (step 1) includes the step of forming a polymer by performing cross-linking polymerization of a water-soluble ethylene-based unsaturated monomer having an acidic group in the presence of an internal cross-linking agent (step 1-1); and the step of forming a hydrogel polymer by neutralizing at least some of the acidic groups of the polymer (step 1-2), referred to as a post-neutralization polymerization process, agglomeration of particles is suppressed without an additional pulverization process before drying, thereby enabling excellent drying efficiency.

Drying is performed on the hydrogel polymer that has been pulverized as described above or immediately after polymerization without the pulverization step. The drying temperature in the drying step may be about 150 to about 250 °C. When the drying temperature is less than 150 °C, the drying time may become excessively long and physical properties of the super absorbent polymer to be finally formed may decrease. When the drying temperature is more than 250 °C, only the surface of the polymer is excessively dried, a fine powder may be generated in the subsequent pulverization process, and physical properties of the super absorbent polymer to be finally formed may decrease. Therefore, the drying may preferably be performed at a temperature of about 150 to about 200 °C, more preferably at a temperature of about 170 to

about 190 °C. The drying can be performed in multiple stages by varying the temperature within the above temperature range.

Meanwhile, the drying time may be 20 minutes to 90 minutes in consideration of process efficiency, but is not limited thereto.

The drying method in the drying step is not particularly limited if it has been generally used in the drying process of the hydrogel polymer. Specifically, the drying step may be performed by the method of hot air provision, infrared radiation, microwave radiation, UV ray radiation, and the like. After the drying step, the moisture content of the polymer may be about 0.1 to about 10 wt%.

**(Primary pulverization)**

Subsequently, the preparation method of a super absorbent polymer according to an embodiment of the present disclosure includes the step of primary pulverizing the dried base resin and classifying it into particles equal to or larger than a standard diameter and particles smaller than a standard diameter (step 3). The step of pulverizing the dried polymer is referred to as 'primary pulverization' in this specification to distinguish it from the pulverization of step 4 (referred to as 'secondary pulverization') to be described later.

In the primary pulverization, the hydrogel polymer is pulverized to have a relatively large diameter, thereby reducing the generation of initial fine powder, and smoothing the operation of the secondary pulverization performed to the final diameter desired in the present disclosure. Accordingly, the generation of fine powder in the finally manufactured product can be reduced.

The "particles equal to or larger than a standard diameter" refer to particles having a relatively large particle diameter compared to particles that have undergone a typical pulverization process after drying, and the standard diameter is determined within the range of 300 μm or more to 850 μm or less. When the standard diameter is determined within the above range, the amount of initial fine powder generated can be significantly controlled. Preferably, the standard diameter may be determined within the range of 600 μm or more to 850 μm or less, and more preferably, the standard diameter may be 710 μm.

Generally, the "fine powder" refers to particles having a particle diameter of less than 150 μm. As described above, the primary pulverization process of the present disclosure performs the pulverization to a relatively large diameter, so the amount of initial fine powder generated among the classified base resin is significantly reduced.

In step 3, the primary pulverization may be performed so that particles equal to or larger than the standard diameter account for 40 wt% or more of the total pulverized particles. When the particles equal to or larger than the standard diameter are included within the above range, the amount of fine powder generated in the final product can be effectively controlled by manufacturing the final products using the above particles through a hydration process to be described later. Preferably, the primary pulverization may be performed so that particles equal to or larger than the standard diameter account for 45 wt% or more, 48 wt% or more, 50 wt% or more, 55 wt% or more, or 60 wt% or more of the total pulverized particles.

Further, in step 3, the primary pulverization may be performed so that particles equal to or larger than 10 mm account for less than 5 wt% of the total pulverized particles. The particles equal to or larger than 10 mm are particles that have not been pulverized normally, and may place a load on the machine during the secondary pulverization process. Therefore, when the pulverization is performed to include a trace amount of particles equal to or larger than 10 mm in the primary pulverization, it is possible to smoothen the operation of the machine during secondary pulverization and reduce excessive pulverization, thereby reducing the amount of fine powder generated. Preferably, the primary pulverization may be performed so that the particles equal to or larger than 10 mm account for less than 4 wt%, less than 3 wt%, less than 2 wt%, less than 1 wt%, most preferably about 0 wt% of the total pulverized particles.

The method of performing the primary pulverization process is not particularly limited, and can be appropriately adjusted to satisfy the content range of the particles described above.

Specifically, the primary pulverization process may be performed using a pulverizing machine having a hole plate having hole size of 5 mm to 20 mm, more preferably 8 mm to 12 mm. Herein, the hole plate is a perforated plate in which a plurality of holes are formed, and the diameter of the holes satisfies the above-mentioned range. When primary pulverization is performed under the above conditions, surface hydration and secondary pulverization processes of the particles having the specific diameter to be described later can be easily performed, thereby significantly reducing the generation of fine powder during production of the final super absorbent polymer.

Preferably, the pulverizing machine used for the primary pulverization may be a rotary cutter mill including the hole plate and a rotating screw. When using the rotary cutter mill, it is possible to increase the pulverizing amount and it is easier to pulverize particles with a high moisture content.

**(Hydration)**

Subsequently, the preparation method of a super absorbent polymer according to an embodiment of the present disclosure includes the step of obtaining a hydrated super absorbent polymer using a surface hydrating solution containing water on the base resin having a diameter equal to or larger than the standard diameter obtained after the primary pulverization and classification (step 4). Through the hydration process, it is possible to significantly reduce the amount of fine powder generated in the secondary pulverization process to be described later.

Herein, water may be used alone as the surface hydrating solution.

The surface hydrating solution may be used in an amount of 0.1 to 10 parts by weight, preferably 0.5 to 7 parts by weight, or 1 to 5 parts by weight based on 100 parts by weight of the base resin. When used within the above range, uniform surface hydration can be performed.

In addition, the surface hydrating solution may further contain at least one additive selected from the group consisting of polyacrylic acid-polyethylene oxide comb polymer (GK), aluminum sulfate, polyethylene glycol, sodium dodecyl sulfate, glycerol monolaurate, and sodium stearoyl lactylate in addition to water. Preferably, polyacrylic acid-polyethylene oxide comb polymer (GK), and aluminum sulfate may be used. The use of the above additive improves dispersibility of the surface hydrating solution, thereby allowing more uniform surface hydration to be performed on the surface of the base resin particles.

The additive may be used in an amount of 0.01 to 10 parts by weight, preferably 0.01 to 5 parts by weight, 0.05 to 3 parts by weight, or 0.1 to 1 part by weight, based on 100 parts by weight of the surface hydrating solution. When used within the above range, uniform surface hydration can be performed with appropriate dispersibility.

The method of adding the surface hydrating solution to the base resin is not particularly limited. For example, a method of adding the base resin and the surface hydrating solution in a reactor for mixing, a method of spraying the surface hydrating solution onto the base resin, or a method of mixing the base resin and the surface hydrating solution while continuously providing them to a continuously operating mixer may be used.

Preferably, the hydration step may be performed by adding the base resin and the surface hydrating solution in a reactor, followed by stirring at 100 rpm to 1,000 rpm, preferably at 300 rpm to 800 rpm. When performed under the above conditions, it is suitable for performing uniform surface hydration.

**(Secondary pulverization)**

Subsequently, the preparation method of a super absorbent polymer according to an embodiment of the present disclosure includes the step of secondary pulverizing the hydrated super absorbent polymer to obtain a super absorbent polymer (step 5).

The above-described hydration step is performed on the base resin having a diameter equal to or larger than the standard diameter, and the resulting hydrated super absorbent polymer has particles equal to or larger than the standard diameter. Accordingly, a second pulverization step is performed so that the final super absorbent polymer can have the desired diameter.

In some cases, a reclassification process may be further performed to exclude particles having a large diameter among the hydrated super absorbent polymers subject to the secondary pulverization. For example, particles equal to or larger than 20 mm, preferably equal to or larger than 10 mm, may be reclassified and excluded. As described above, particles with an excessively large diameter are undried and excluded so as not to increase the load in the pulverization process.

The secondary pulverization is performed to a smaller diameter than the primary pulverization. In the case of the super absorbent polymer that has undergone a hydration step, even if pulverized to a smaller diameter, the amount of fine powder generated is significantly reduced due to the appropriate moisture content.

In step 5, the secondary pulverization may be performed so that particles having a diameter of 150 $\mu$m to 850 $\mu$m account for 90 wt% or more, preferably 95 wt% or more of the total pulverized particles.

The method of performing the secondary pulverization process is not particularly limited, and can be appropriately adjusted to satisfy the content range of the particles described above.

Preferably, secondary pulverization may be performed using a pulverizing machine including a plurality of rollers with corrugations. The roller may have 2 to 12 corrugations per about 1 cm, and the gap between the plurality of rollers may each independently be about 0.1 mm to about 1 mm. The plurality of rollers of the pulverizing machine may rotate at different speeds, and may be configured in a plurality of stages. More preferably, the pulverizing machine may be a two-stage roll mill. In the case of a roll mill using multiple stages, the gap between the corresponding rollers narrows depending on the stage in which the pulverization is performed, and it is easy to control the desired diameter through pulverization.

**(Other steps)**

According to an embodiment of the present disclosure, in order to control physical properties of the super absorbent polymer powder to be prepared as a final product, the super absorbent polymer prepared after the secondary pulverization step may be classified according to the diameter. Preferably, the super absorbent polymer can be classified such that the particle diameter is 150 μm to 850 μm. As described above, the super absorbent polymer manufactured through the pulverization and hydration under specific conditions may include less than about 3 wt%, preferably less than about 1 wt% of a fine powder having a particle diameter of less than 150 μm.

The preparation method of a super absorbent polymer according to an embodiment of the present disclosure may further include the step (step 6) of mixing the super absorbent polymer secondary-pulverized (or super absorbent polymer after additional classification process) in step 5 and the particles smaller than the standard diameter classified after primary pulverization in step 3.

Particles smaller than the standard diameter classified after primary pulverization in step 3 are also pulverized into a relatively large diameter to contain less than about 3 wt%, preferably less than about 1 wt% of a fine powder having a particle diameter of less than 150 μm. The super absorbent polymer secondary-pulverized in step 5 may also contain less than about 3 wt%, preferably less than about 1 wt% of a fine powder having a particle diameter of less than 150 μm.

More preferably, the fine powder having a particle diameter of less than 150 μm may be in an amount of less than about 3 wt%, preferably less than about 1 wt%, based on the total amount of the super absorbent polymer after the mixing step in step 6.

Meanwhile, an additional classification process can be optionally performed after mixing in step 6, and super absorbent polymer particles having a particle diameter of 150 μm to 850 μm can be recovered using a classification sieve.

**(Surface cross-linking step)**

The preparation method of a super absorbent polymer according to an embodiment of the present disclosure may further include the step (step 7) of heat-treating the super absorbent polymer in the presence of a surface cross-linking agent to cross-link a surface of the super absorbent polymer. Herein, the super absorbent polymer subjected to surface cross-linking may be the super absorbent polymer secondary-pulverized in step 5, or the super absorbent polymer after the mixing step in step 6. Additionally, the object of the surface cross-linking may be a polymer that has undergone an additional classification step, which is optional.

The surface cross-linking step is to induce a cross-linking reaction on the surface of the super absorbent polymer in the presence of a surface cross-linking agent, and unsaturated bonds of the water-soluble ethylene-based unsaturated monomer remaining on the surface without cross-linking are cross-linked by the surface cross-linking agent, thereby forming a super absorbent polymer with a high surface cross-linking density.

Specifically, a surface cross-linked layer may be formed by a heat-treatment process in the presence of a surface cross-linking agent. The heat-treatment process increases the surface cross-linking density, that is, the external cross-linking density, but does not change the internal cross-linking density. Accordingly, the prepared super absorbent polymer having the surface cross-linked layer has a structure having higher cross-linking density on the outside than inside.

In the surface cross-linking step, a surface cross-linking composition containing an alcohol-based solvent and water in addition to the surface cross-linking agent may be used.

As the surface cross-linking agent contained in the surface cross-linking composition, any cross-linking agent that has been conventionally used in the preparation of a super absorbent polymer may be used without any particular limitation. Examples of the surface cross-linking agent may include at least one polyol selected from the group consisting of ethylene glycol, propylene glycol, 1,3-propanediol, 1,4-butanediol, 1,6-hexanediol, 1,2-hexanediol, 1,3-hexanediol, 2-methyl-1,3-propanediol, 2,5-hexanediol, 2-methyl-1,3-pentanediol, 2-methyl-2,4-pentanediol, tripropylene glycol and glycerol; at least one carbonate-based compound selected from the group consisting of ethylene carbonate, and propylene carbonate; an epoxy compound such as ethylene glycol diglycidyl ether; an oxazoline compound such as oxazolidinone; a polyamine compound; an oxazoline compound; a mono-, di- or poly-oxazolidinone compound; a cyclic urea compound; and the like. Preferably, the surface cross-linking agent may be the same as the internal cross-linking agent. For example, a diglycidyl ether-based compound of alkylene glycol such as ethylene glycol diglycidyl ether may be used.

The surface cross-linking agent may be used in an amount of 0.001 to 2 parts by weight based on 100 parts by weight of the super absorbent polymer. Preferably, it may be used in an amount of 0.005 parts by weight or more, 0.01 parts by weight or more, or 0.02 parts by weight or more, and 0.5 parts by weight or less, or 0.3 parts by weight or less. When adjusting the content range of the surface cross-linking agent within the above-described range, a super absorbent polymer exhibiting various physical properties such as excellent absorption performance and permeability can be prepared.

Meanwhile, the surface cross-linking agent is added to the super absorbent polymer particles in the form of a

surface cross-linking composition containing the same, and the method of adding the surface cross-linking composition is not particularly limited. For example, a method of adding the surface cross-linking composition and the base resin powder in a reactor for mixing, a method of spraying the surface cross-linking composition onto the base resin powder, or a method of mixing the base resin powder and the surface cross-linking composition while continuously providing them to a continuously operating mixer may be used.

In addition, the surface cross-linking composition may further include water and/or a hydrophilic organic solvent as a medium. With this, there is an advantage in that the surface cross-linking agent may be evenly dispersed on the base resin powder. At this time, amounts of water and a hydrophilic organic solvent to be added based on 100 parts by weight of the base resin powder may be properly controlled for the purposes of inducing a uniform dissolution/dispersion of the surface cross-linking agent, preventing an agglomeration phenomenon of the base resin powder, and optimizing a surface penetration depth of the surface cross-linking agent.

The surface cross-linking step may be performed by heat treatment at a temperature of 110 °C to 200 °C or 110 °C to 150 °C for 30 minutes or more. More specifically, the surface cross-linking reaction may be performed by heat treatment for 30 to 80 minutes or 40 to 70 minutes at the maximum reaction temperature which is the above-mentioned temperature.

When satisfying these surface cross-linking process conditions (particularly, the temperature elevating condition and the reaction condition at maximum reaction temperature), a super absorbent polymer that appropriately satisfies physical properties such as better permeability under pressure can be produced.

The heating means for the surface cross-linking reaction is not particularly limited. It is possible to provide a thermal media thereto or provide a heat source directly thereto. At this time, usable thermal media may be a heated fluid such as steam, hot air, hot oil, and the like, but the present invention is not limited thereto. Furthermore, the temperature of the thermal media provided thereto may be properly selected in consideration of the means of the thermal media, heating speed, and target temperature of heating. Meanwhile, an electric heater or a gas heater may be used as the heat source provided directly, but the present disclosure is not limited thereto.

Meanwhile, in the preparation method of a super absorbent polymer according to one embodiment of the present disclosure, aluminum salts such as aluminum sulfate salts and other various polyvalent metal salts may be further used during surface cross-linking to further improve permeability. Such a polyvalent metal salt may be included on the surface cross-linked layer of the finally prepared super absorbent polymer.

Hereinafter, the function and effect of the present invention will be described in more detail through specific examples. However, these examples are for illustrative purposes only, and the invention is not intended to be limited by these examples.

**<Examples>**

**Example 1**

(Step 1 - Polymerization)

In a 3L glass container equipped with a stirrer and a thermometer, 100 g of acrylic acid, 130 g of 31.5 wt% caustic soda (NaOH) solution, 0.15 g of polyethylene glycol diacrylate as an internal cross-linking agent, 0.2 g of sodium persulfate as a thermal polymerization initiator, 0.01 g of diphenyl(2,4,6-trimethylbenzoyl) phosphine oxide as a photopolymerization initiator and 45.0 g of water were mixed at room temperature (25±1°C) to prepare a monomer composition. Thereafter, the monomer composition was placed in a square reactor of 30 cm in width and 30 cm in height, and a polymerization reaction was performed for 60 seconds by irradiating ultraviolet rays with an intensity of 10 mW/cm$^2$ to obtain a hydrogel polymer.

(Step 2 - Drying)

The polymerized hydrogel polymer was cut into pieces of 5 cm in width and 5 cm in height, and then chopped using a screw-type chopper (meat chopper) with a hole size of 10 mm.

The chopped hydrogel polymer was placed in an airflow dryer and dried at 180 °C for 30 minutes to obtain a base resin.

(Step 3 - Primary pulverization and classification)

The dried base resin was added to a cutter mill with a mesh size of 8 mm, and primary pulverization was performed so that the speed of the rotating blade was 2000 rpm. The pulverized base resin particles were classified using an ASTM standard mesh into particles (A) equal to or larger than a standard diameter (710 μm) and particles (B) smaller than the standard diameter. At this time, the particles (A) equal to or larger than the standard diameter (710 μm) accounted for 64 wt% of the total pulverized particles. In addition, among the primary-pulverized particles, particles equal to or larger

than 10 mm accounted for 0 wt% of the total pulverized particles.

(Step 4 - Hydration)

100 g of the particles (A) equal to or larger than the standard diameter (710 μm) obtained after the primary pulverization and classification were added to a high-speed mixer and stirred at 300 rpm, while 5 g of a surface hydrating solution (0.1% GK aqueous solution) was added and further stirred for 30 seconds. Thus, the base resin was subjected to surface hydration to obtain a hydrated super absorbent polymer.

(Step 5 - Secondary pulverization)

The hydrated super absorbent polymer was put into a two-stage roll mill with a roll gap of 0.3 m and 0.15 mm, respectively, and secondary pulverization was performed to obtain a super absorbent polymer (C).

(Step 6 - Mixing)

A step (step 6) of mixing the particles (B) smaller than the standard diameter classified in step 3 and the super absorbent polymer (C) secondary-pulverized in step 5 was performed.

(Step 7 - Surface cross-linking)

The super absorbent polymer mixed in step 6 was further additionally classified using an ASTM standard mesh to have a particle diameter of 150 μm to 850 μm. 100 g of the additionally classified polymer was mixed with a surface cross-linking solution containing 5.0 g of water, 0.1 g of propylene glycol, 1.0 g of ethylene carbonate, 1.0 g of propylene carbonate, and 1.0 g of a 23% aqueous solution of aluminum sulfate for 2 minutes, and the surface cross-linking reaction was performed at 180 °C for 40 minutes. After the surface cross-linking reaction, the super absorbent polymer was classified again using an ASTM standard mesh to have a particle diameter of 150 μm to 850 μm.

**Example 2**

A super absorbent polymer was prepared in the same manner as in Example 1, except that the amount of the surface hydrating solution was changed to 4 g in step 4 of Example 1.

**Example 3**

A super absorbent polymer was prepared in the same manner as in Example 1, except that the amount of the surface hydrating solution was changed to 3 g in step 4 of Example 1.

**Example 4**

A super absorbent polymer was prepared in the same manner as in Example 1, except that 5 g of water was used instead of the GK aqueous solution as the surface hydrating solution in step 4 of Example 1.

**Example 5**

A super absorbent polymer was prepared in the same manner as in Example 1, except that 0.2% GK aqueous solution was used as the surface hydrating solution in step 4 of Example 1.

**Example 6**

A super absorbent polymer was prepared in the same manner as in Example 1, except that 0.3% GK aqueous solution was used as the surface hydrating solution in step 4 of Example 1.

**Example 7**

A super absorbent polymer was prepared in the same manner as in Example 1, except that 5 g of 2% aqueous solution of aluminum sulfate was used as the surface hydrating solution in step 4 of Example 1.

**Example 8**

A super absorbent polymer was prepared in the same manner as in Example 1, except that 5 g of 0.1% GK aqueous solution + 2% aqueous solution of aluminum sulfate was used as the surface hydrating solution in step 4 of Example 1.

**Example 9**

A super absorbent polymer was prepared in the same manner as in Example 1, except that the pulverization was performed so that the particles (A) equal to or larger than the standard diameter (710 μm) accounted for 48 wt% of the total pulverized particles in step 3 of Example 1.

**Example** 10

A super absorbent polymer was prepared in the same manner as in Example 1, except that the pulverization was performed so that the particles (A) equal to or larger than the standard diameter (710 μm) accounted for 75 wt% of the total pulverized particles in step 3 of Example 1.

**Example 11**

A super absorbent polymer was prepared by performing the steps 3 to 7 in the same manner as in Example 1, and changing the polymerization of step 1 and the drying of step 2 in Example 1 as follows.

(Step 1-1 - Polymerization)

In a 10L glass container equipped with a stirrer and a thermometer, 1500 g of acrylic acid, 6.3 g of pentaerythritol triallyl ether as an internal cross-linking agent, and 3387 g of water were stirred and mixed, and stirred while maintaining the temperature at 5 °C. The glass container containing the mixture was replaced with nitrogen conditions by flowing 1000 cc/min of nitrogen for 1 hour. Thereafter, 20.1 g of 0.3% aqueous solution of hydrogen peroxide, 22.5 g of 1% aqueous solution of ascorbic acid, and 45.0 g of 2% aqueous solution of 2,2'-azobis-(2-amidinopropane) dihydrochloride were added as a polymerization initiator, and at the same time, 22.3 g of 0.01% aqueous solution of iron sulfate was added as a reducing agent to initiate polymerization. After the temperature of the mixture reached 85 °C, polymerization was performed at 90±2 °C for about 3 hours to obtain a polymer.

(Step 1-3: Micronization; Step 1-2: Neutralization (agglomeration))

While rotating a micronizer (F200, Karl Schnell) equipped with a perforated plate containing a plurality of holes with a hole size of 10 mm at 1500 rpm, 5,000 g of the obtained polymer was added and micronized into primary particles with a particle diameter of tens to hundreds of micrometers. At this time, 90 g of 1.5 w% aqueous solution of Glycerol Monolaurate (GML) was added to prevent excessive agglomeration.

Afterwards, while rotating a meat chopper, which is a screw-type chopper equipped with a perforated plate containing a plurality of holes with a hole size of 6 mm, at 500 rpm, the micronized polymer was added thereto to prepare secondary agglomerated particles. Herein, this process of preparing secondary agglomerated particles was repeated three times. At this time, 1,904 g of 50% NaOH aqueous solution was added in the first pass to neutralize some of the acidic groups of the polymer. In the second pass, 18.8 g of 15% $Na_2SO_3$ aqueous solution was added to reduce some of the polymer. In the third pass, a neutralized and micronized hydrogel polymer was prepared by passing it without adding any additives.

(Step 2: Drying)

The polymerized hydrogel polymer was cut into pieces of 5 cm in width and 5 cm in height, and then chopped using a screw-type chopper (meat chopper) with a hole size of 10 mm.

The chopped hydrogel polymer was placed in an airflow dryer and dried at 120 °C for 40 minutes to obtain a base resin.

Thereafter, steps 3 to 7 were performed in the same manner as in Example 1 to prepare a super absorbent polymer.

**Comparative Example 1**

A super absorbent polymer was prepared in the same manner as in Example 1, except that the hydration in step 4 was not performed; and the pulverization was performed using a two-stage roll mill with a roll gap of 0.3 mm and 0.2 mm in the secondary pulverization in step 5 of Example 1. That is, steps 1 to 3 were performed in the same manner as in Example 1.

**Comparative Example 2**

(Preparation of fine reassembly)

First, fine particles were obtained by obtaining particles of less than 150 μm separated after classification in each step of Comparative Example 1 (obtained from classification in steps 3 and 7).

While placing 100 g of the obtained fine particles in a high-speed mixer and stirring at 500 rpm, 100 g of water was added thereto and mixed for 10 seconds to prepare a fine reassembly.

(Recycle of fine reassembly)

A hydrogel polymer was prepared in the same manner as in step 1 of Comparative Example 1 (=Example).

Thereafter, 1,000 g of the hydrogel polymer obtained by cutting the polymerized hydrogel polymer into pieces of 5 cm in width and 5 cm in height was mixed with 100 g of the previously obtained fine reassembly, and the mixture was chopped using a screw-type chopper (meat chopper) with a hole size of 10 mm.

The chopped hydrogel polymer was placed in an airflow dryer and dried at 180 °C for 30 minutes to obtain a base resin. Thereafter, the subsequent processes were performed in the same manner as in Comparative Example 1 to prepare a super absorbent polymer.

**Comparative Example 3**

A super absorbent polymer was prepared in the same manner as in Example 11, except that the hydration in step 4 was not performed; and the pulverization was performed using a two-stage roll mill with a roll gap of 0.3 mm and 0.2 mm in the secondary pulverization in step 5 of Example 11. That is, steps 1 to 3 were performed in the same manner as in Example 11.

**<Experimental Examples>**

Experimental Example 1 - Evaluation of physical properties of particles

The super absorbent polymer prepared in each of Examples and Comparative Examples was classified by vibrating at 1.5 mm/g amplitude for 10 minutes using a classifier with an ASTM standard of 4000 μm, 2000 μm, 1400 μm, 850 μm, 710 μm, 600 μm, 300 μm, 150 μm, and pan. The weight of the particles on each sieve was measured, and then the average diameter and the amount of fine powder generated were measured as follows.

(1) Average diameter (μm)

The average diameter of the classified super absorbent polymer was measured according to Equation 1 below, and the results are shown in Table 1.

[Equation 1]

$$\text{Average diameter } (\mu m) = \sum_{i=n}^{m} \left\{ \frac{\text{Size of the } n\text{th sieve} + \text{Size of the } (n+1)\text{th sieve}}{2} \times \text{Weight of particles retained on the } n\text{th sieve} \right\}$$

(2) Amount of fine powder generated

The amount of fine powder generated of the classified super absorbent polymer was measured according to Equation 2 below, and the results are listed in Table 1.

The amount of fine powder generated (%) = (Weight of particles of less than 150 μm)/(Weight of particles of 150 μm or more to less than 850 μm)*100 [Equation 2]

Experimental Example 2 - Evaluation of physical properties of super absorbent polymer

The physical properties of the super absorbent polymer prepared in each of Examples and Comparative Examples were evaluated in the following manner and are listed in Table 1 below.

Unless otherwise indicated, all procedures were conducted in a constant temperature and humidity room (23±1 °C, relative humidity of 50±10%), and physiological saline or saline means a 0.9 wt% sodium chloride (NaCl) aqueous solution.

(1) Centrifuge Retention Capacity (CRC, g/g)

The centrifugal retention capacity of the super absorbent polymer prepared in each of Examples and Comparative Examples was measured according to EDANA WSP 241.3 (European Disposables and Nonwovens Association).

After inserting $W_0$ (g, about 0.2 g) of the super absorbent polymer prepared in each of Examples and Comparative Examples uniformly in a nonwoven fabric envelope and sealing the same, it was soaked in saline (0.9 wt%) at room temperature. After 30 minutes, the envelope was centrifuged at 250G for 3 minutes to drain, and the weight $W_2$ (g) of the envelope was measured. Further, after carrying out the same operation without using the super absorbent polymer, the weight $W_1$ (g) of the envelope was measured.

Then, CRC (g/g) was calculated by using the obtained weight values according to the following Equation 3.

[Equation 3]

$$CRC\ (g/g) = \{[W_2(g) - W_1(g)]/W_0(g)\} - 1$$

(2) Absorbency under Pressure (AUP, g/g)

The absorbency under pressure at 0.3 psi of the super absorbent polymer prepared in each of Examples and Comparative Examples was measured according to EDANA WSP 242.3.

Specifically, a 400 mesh stainless steel screen was installed in a cylindrical bottom of a plastic having an inner diameter of 25 mm. $W_0$ (g, 0.9 g) of the super absorbent polymer was uniformly scattered on the screen at room temperature and a humidity of 50%. Thereafter, a piston which can uniformly provide a load of 0.3 psi was placed thereon. Herein, the outer diameter of the piston was slightly smaller than 25 mm, there was no gap with the inner wall of the cylinder, and jig-jog of the cylinder was not interrupted. At this time, the weight $W_3$ (g) of the device was measured.

Subsequently, a glass filter having a diameter of 90 mm and a thickness of 5 mm was placed in a petri dish having a diameter of 150 mm, and saline composed of 0.9 wt% sodium chloride was poured in the dish. At this time, the saline was poured until the surface level of the saline became equal to the upper surface of the glass filter. One sheet of filter paper with a diameter of 90 mm was placed thereon. After the measuring device was placed on the filter paper, the liquid was absorbed for 1 hour under a load. After 1 hour, the measuring device was lifted, and the weight $W_4$ (g) was measured.

Then, absorbency under pressure (g/g) was calculated by using the obtained weight values according to the following Equation 4.

[Equation 4]

$$AUP(g/g) = [W_4(g) - W_3(g)]/W_0(g)$$

The above measurement was repeated 5 times, and the average value and standard deviation were obtained.

(3) Vortex time (sec)

The vortex time was measured in seconds according to the method described in International Patent Publication No. 1987-003208.

Specifically, 2 g of a super absorbent polymer was added to 50 mL of saline at 23 to 24 °C, and a magnetic bar (8 mm in diameter, 30 mm in length) was stirred at 600 rpm to measure the time taken until the vortex disappeared in seconds.

[Table 1]

| Category | Average diameter (μm) | Amount of fine powder generated (%) | CRC (g/g) | AUP (g/g) | Vortex time (sec) |
|---|---|---|---|---|---|
| Example 1 | 466 | 8.0 | 37.1 | 31.9 | 33 |
| Example 2 | 466 | 8.3 | 36.8 | 32.0 | 34 |
| Example 3 | 471 | 10.3 | 36.5 | 31.8 | 35 |
| Example 4 | 476 | 9.1 | 36.7 | 31.5 | 36 |
| Example 5 | 461 | 8.1 | 36.2 | 31.0 | 35 |
| Example 6 | 455 | 7.8 | 36.6 | 30.5 | 34 |
| Example 7 | 480 | 10.3 | 36.5 | 30.6 | 34 |
| Example 8 | 472 | 8.4 | 36.2 | 31.8 | 35 |
| Example 9 | 462 | 9.4 | 36.5 | 31.4 | 34 |
| Example 10 | 470 | 7.5 | 36.4 | 31.8 | 36 |
| Example 11 | 460 | 7.5 | 37.4 | 33.1 | 30 |
| Comparative Example 1 | 471 | 14.4 | 36.7 | 31.4 | 39 |
| Comparative Example 2 | 465 | 15.9 | 35.8 | 30.8 | 38 |
| Comparative Example 3 | 462 | 13.5 | 37.2 | 32.9 | 37 |

Referring to Table 1, it was confirmed in Examples that the amount of fine powder generated was significantly reduced by performing the pulverization and hydration processes under specific conditions, and thus excellent absorption properties were achieved. In the case of Comparative Examples in which the pulverization and hydration processes according to the present disclosure were not performed, it was confirmed that the amount of fine powder generated was significantly increased compared to Examples, and accordingly, physical properties such as vortex time were reduced.

**Claims**

**1.** A preparation method of a super absorbent polymer comprising the steps of:

forming a hydrogel polymer containing a cross-linked polymer obtained by cross-linking polymerization of a water-soluble ethylene-based unsaturated monomer having an acidic group in the presence of an internal cross-linking agent (step 1);
drying the hydrogel polymer to prepare a base resin (step 2); and
primary pulverizing the dried base resin and classifying it into particles equal to or larger than a standard diameter and particles smaller than a standard diameter (step 3);
obtaining a hydrated super absorbent polymer using a surface hydrating solution containing water on the classified base resin equal to or larger than the standard diameter (step 4); and
secondary pulverizing the hydrated super absorbent polymer to obtain a super absorbent polymer (step 5),
wherein the standard diameter is determined within the range of 300 μm or more to 850 μm or less.

**2.** The preparation method of a super absorbent polymer of Claim 1,
wherein the primary pulverization is performed so that the particles equal to or larger than the standard diameter account for 40 wt% or more of the total pulverized particles in step 3.

**3.** The preparation method of a super absorbent polymer of Claim 1,
wherein the primary pulverization is performed so that particles equal to or larger than 10 mm account for less than 5 wt% of the total pulverized particles in step 3.

**4.** The preparation method of a super absorbent polymer of Claim 1,
wherein the standard diameter is determined within the range of 600 μm or more to 850 μm or less.

5. The preparation method of a super absorbent polymer of Claim 1, wherein the surface hydrating solution is used in an amount of 0.1 to 10 parts by weight based on 100 parts by weight of the base resin in step 4.

6. The preparation method of a super absorbent polymer of Claim 1, wherein the surface hydrating solution further contains an additive selected from the group consisting of polyacrylic acid-polyethylene oxide comb polymer (GK), aluminum sulfate, polyethylene glycol, sodium dodecyl sulfate, glycerol monolaurate, and sodium stearoyl lactylate in step 4.

7. The preparation method of a super absorbent polymer of Claim 6, wherein the additive is contained in an amount of 0.01 to 10 parts by weight based on 100 parts by weight of the surface hydrating solution.

8. The preparation method of a super absorbent polymer of Claim 1, wherein the step 4 is performed by stirring at 100 rpm to 1,000 rpm.

9. The preparation method of a super absorbent polymer of Claim 1, wherein the secondary pulverization is performed so that particles having a diameter of 150 μm to 850 μm account for 90 wt% or more of the total pulverized particles in step 5.

10. The preparation method of a super absorbent polymer of Claim 1, further comprising a step (step 6) of mixing the particles smaller than the standard diameter classified in step 3 and the super absorbent polymer secondary-pulverized in step 5.

11. The preparation method of a super absorbent polymer of Claim 1 or Claim 10, further comprising a step (step 7) of heat-treating the super absorbent polymer in the presence of a surface cross-linking agent to cross-link a surface of the super absorbent polymer.

## INTERNATIONAL SEARCH REPORT

International application No.
**PCT/KR2023/013127**

**A. CLASSIFICATION OF SUBJECT MATTER**

**C08J 3/24**(2006.01)i; **C08J 3/12**(2006.01)i

According to International Patent Classification (IPC) or to both national classification and IPC

**B. FIELDS SEARCHED**

Minimum documentation searched (classification system followed by classification symbols)

C08J 3/24(2006.01); A61L 15/60(2006.01); B01J 20/26(2006.01); B29B 9/02(2006.01); C08K 3/011(2018.01); C08K 3/013(2018.01); C08K 5/00(2006.01); C08K 5/20(2006.01); C08L 101/14(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고흡수성 수지(superabsorbent polymer), 함수겔(water-containing gel), 분급(classification), 표면 가수(surface hydrolysis), 표면 가교(surface cross-linking)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2021-0036740 A (LG CHEM, LTD.) 05 April 2021 (2021-04-05)<br>See claims 1-13; and paragraphs [0045]-[0128]. | 1-11 |
| Y | KR 10-2018-0003815 A (HANWHA CHEMICAL CORPORATION) 10 January 2018 (2018-01-10)<br>See claims 1 and 3; and paragraphs [0053]-[0092]. | 1-11 |
| A | JP 2019-031691 A (EVONIK CORP.) 28 February 2019 (2019-02-28)<br>See entire document. | 1-11 |
| A | KR 10-2020-0073750 A (LG CHEM, LTD.) 24 June 2020 (2020-06-24)<br>See entire document. | 1-11 |
| A | KR 10-2008-0069661 A (EVONIK STOCKHAUSEN GMBH) 28 July 2008 (2008-07-28)<br>See entire document. | 1-11 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 December 2023** | **05 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
**Information on patent family members**

International application No.
**PCT/KR2023/013127**

| Patent document cited in search report | Publication date (day/month/year) | Patent family member(s) | Publication date (day/month/year) |
|---|---|---|---|
| KR 10-2021-0036740 A | 05 April 2021 | None | |
| KR 10-2018-0003815 A | 10 January 2018 | None | |
| JP 2019-031691 A | 28 February 2019 | BR 112015025521 A2 | 18 July 2017 |
| | | CN 105283490 B | 22 May 2018 |
| | | EP 2984124 A1 | 17 February 2016 |
| | | JP 6720271 B2 | 08 July 2020 |
| | | KR 10-2015-0140800 A | 16 December 2015 |
| | | TW 201504314 A | 01 February 2015 |
| | | US 9375507 B2 | 28 June 2016 |
| | | WO 2014-167036 A1 | 16 October 2014 |
| | | WO 2014-167040 A1 | 16 October 2014 |
| | | WO 2014-168858 A1 | 16 October 2014 |
| KR 10-2020-0073750 A | 24 June 2020 | KR 10-2561760 B1 | 28 July 2023 |
| KR 10-2008-0069661 A | 28 July 2008 | AU 2002-322368 A1 | 03 March 2003 |
| | | BR 0211309 A | 28 September 2004 |
| | | CN 1547488 A | 17 November 2004 |
| | | DE 60217678 T2 | 25 October 2007 |
| | | DE 60217678 T3 | 22 March 2012 |
| | | EP 1404385 A2 | 07 April 2004 |
| | | EP 1404385 B1 | 17 January 2007 |
| | | EP 1404385 B2 | 06 July 2011 |
| | | JP 2004-534581 A | 18 November 2004 |
| | | JP 4313191 B2 | 12 August 2009 |
| | | KR 10-0870629 B1 | 26 November 2008 |
| | | KR 10-2004-0014593 A | 14 February 2004 |
| | | US 2007-0060691 A1 | 15 March 2007 |
| | | WO 03-002164 A2 | 09 January 2003 |
| | | WO 03-002164 A3 | 17 April 2003 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220175627


### Non-patent literature cited in the description


- **ODIAN**. Principle of Polymerization. Wiley, 1981, 203
- **REINHOLD SCHWALM**. UV Coatings: Basics, Recent Developments and New Application. Elsevier, 2007, 115